(19) Europäisches Patentamt

European Patent Office

Office européen des brevets

(11) Veröffentlichungsnummer: **0 267 511 B1**

# (12) EUROPÄISCHE PATENTSCHRIFT

(45) Veröffentlichungstag der Patentschrift: **29.01.92**

(51) Int. Cl.⁵: **B01D 53/36**

(21) Anmeldenummer: **87116057.8**

(22) Anmeldetag: **31.10.87**

(54) **Vorrichtung zum Be- und Entladen eines Reaktors zur Denitrierung von Rauchgasen mit fahrbaren Modulen.**

(30) Priorität: **12.11.86 DE 3638600**

(43) Veröffentlichungstag der Anmeldung:
**18.05.88 Patentblatt 88/20**

(45) Bekanntmachung des Hinweises auf die
Patenterteilung:
**29.01.92 Patentblatt 92/05**

(84) Benannte Vertragsstaaten:
**AT CH DE GB LI NL SE**

(56) Entgegenhaltungen:
**DE-A- 3 546 077**
**DE-A- 3 610 457**

(73) Patentinhaber: **Deutsche Babcock Energie-
und Umwelttechnik Aktiengesellschaft
Postfach 10 03 47-48
W-4200 Oberhausen 1(DE)**

(72) Erfinder: **Riese, Wilhelm
Rügenstrasse 41
W-4200 Oberhausen 11(DE)**
Erfinder: **Firlay, Karl-Heinz
Biermannsweg 31
W-4630 Bochum 1(DE)**

(74) Vertreter: **Müller, Jürgen, Dipl.-Ing.
Deutsche Babcock AG Lizenz-und Patentabteilung Duisburger Strasse 375
W-4200 Oberhausen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Vorrichtung zum Be- und Entladen eines Reaktors zur Denitrierung von Rauchgasen mit fahrbaren Modulen

Die Erfindung betrifft eine Vorrichtung zum Be- und Entladen eines Reaktors zur Denitrierung von Rauchgasen mit fahrbaren Modulen nach dem Oberbegriff des Anspruches 1.

Der Reaktor ist von Rauchgasen durchströmt und dient dazu, das in den Rauchgasen enthaltene Stickoxid mit Hilfe von Ammoniak unter Verwendung von Katalysatoren zu reduzieren (Jahrbuch der Dampferzeugungstechnik, Band 2, 5. Ausgabe 1985/86, Seiten 1102 bis 1103). Als Katalysatoren werden keramische, mit Durchgangskanälen versehene Formkörper verwendet, die zu Modulen zusammengefaßt sind. Die Module haben ein Gewicht von etwa 2 bis 4 t und müssen nach einer gewissen Betriebszeit ausgewechselt werden, wenn die Katalysatoren inaktiv geworden sind.

In der nicht vorveröffentlichten deutschen Patentanmeldung P 36 10 457.4 (veröffentlicht 02.07.87) ist ein Reaktorladegerät nach Art eines Flurförderers beschrieben, das auf der Bühne vor den Montageöffnungen des Rekators verfahrbar ist. Der Fahrbereich des Reaktorladegerätes überschneidet sich in einer Position mit dem Fahrbereich eines Kranes, der auf einer Kranbahn oberhalb des Reaktors verfahrbar ist. Auf dem Ladegerät ist quer zu dessen Fahrrichtung eine Plattform und darauf eine an das Modul angreifende Schiebeeinrichtung jeweils über einen eigenen Antrieb verschiebbar angeordnet.

In der ebenfalls nicht vorveröffentlichten deutschen Patentanmeldung P 35 46 077.6 (veröffentlicht 02.07.87) ist eine Vorrichtung zum Handhaben von Verschlußklappen für die Montageöffnungen des Reaktors bei der Montage und Demontage offenbart, die aus einem Gestell besteht, das mit einem Hubwagen nach Art eines Flurförderers verbunden ist. Das Gestell ist mit Greifern versehen, die Querstangen an der Verschlußklappe untergreifen. An dem Gestell ist ferner eine mit der Verschlußklappe verbindbare Gewindespindel schwenkbar angeordnet. Der Hubwagen kann mit einer Winde versehen sein, die zum Herausziehen und Hineinschieben der Module aus dem bzw. in den Reaktor sowie zum Festhalten der Module auf dem Hubwagen dient.

Der Erfindung liegt die Aufgabe zugrunde, die gattungsgemäße Vorrichtung zum Be- und Entladen eines Reaktors zur Denitrierung von Rauchgasen mit fahrbaren Modulen derart zu gestalten, daß die Positionen der Module innerhalb des Reaktors mit Hilfe eines Wagens exakt angesteuert werden können und daß der Ent-oder Beladungsvorgang des Reaktors in kurzer Zeit durchgeführt werden kann.

Diese Aufgabe wird bei einer gattungsgemäßen Vorrichtung erfindungsgemäß durch die kennzeichnenden Merkmale des Anspruches 1 gelöst. Vorteilhafte Ausgestaltungen der Erfindung sind in den Unteransprüchen angegeben.

Mit Hilfe der Zielfindungseinrichtung und der Andockvorrichtung kann der Wagen ein Modul exakt in eine seitlich und vertikal ausgerichtete Lage vor die Position bringen, in die das Modul geschoben werden soll. Ist diese Lage erreicht, so ist der Wagen zur Lastübergabe bereit und das Modul kann mit Hilfe der auf dem Wagen angeordneten Seilwinde in die vorgesehene Position geschoben werden. Damit läßt sich das Be- und Entladen des Reaktors mit den fahrbaren Modulen in kurzer Montagezeit bei engen Einbauverhältnissen durchführen, wobei keine Gefahr besteht, daß die Module oder die Reaktorwände beschädigt werden.

Mehrere Ausführungsbeispiele der Erfindung sind in der Zeichnung dargestellt und werden im folgenden näher erläutert. Es zeigen:

Fig. 1    die Seitenansicht eines Modulwagens gemäß der Erfindung,

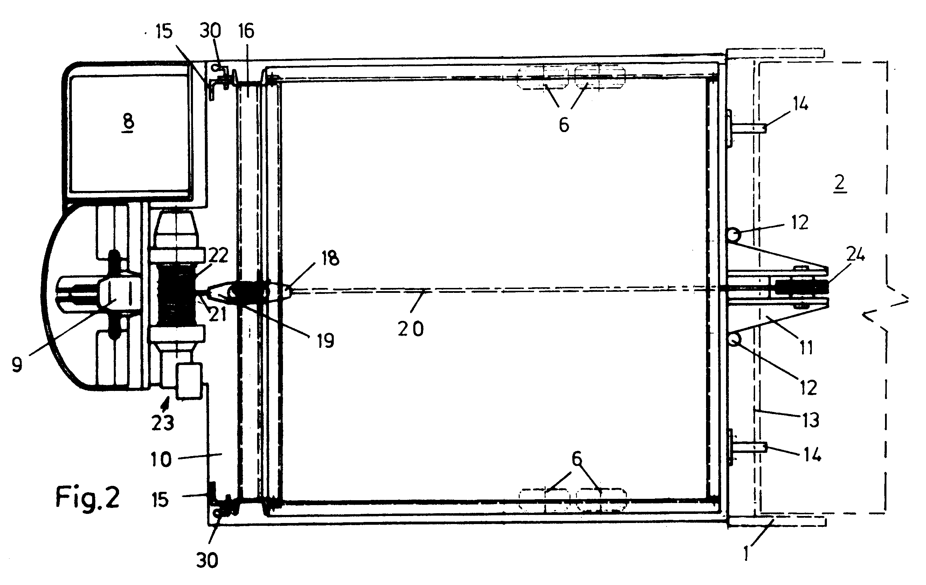

Fig. 2    die Draufsicht zu Fig. 1,

Fig. 3    die Draufsicht auf einen anderen Modulwagen gemäß der Erfindung,

Fig. 4    die Seitenansicht des hinteren Endes des Modulwagens mit einer Ein- und Ausbauvorrichtung,

Fig. 5    die Seitenansicht des Modulwagens gemäß einer anderen Ausführungsform der Erfindung,

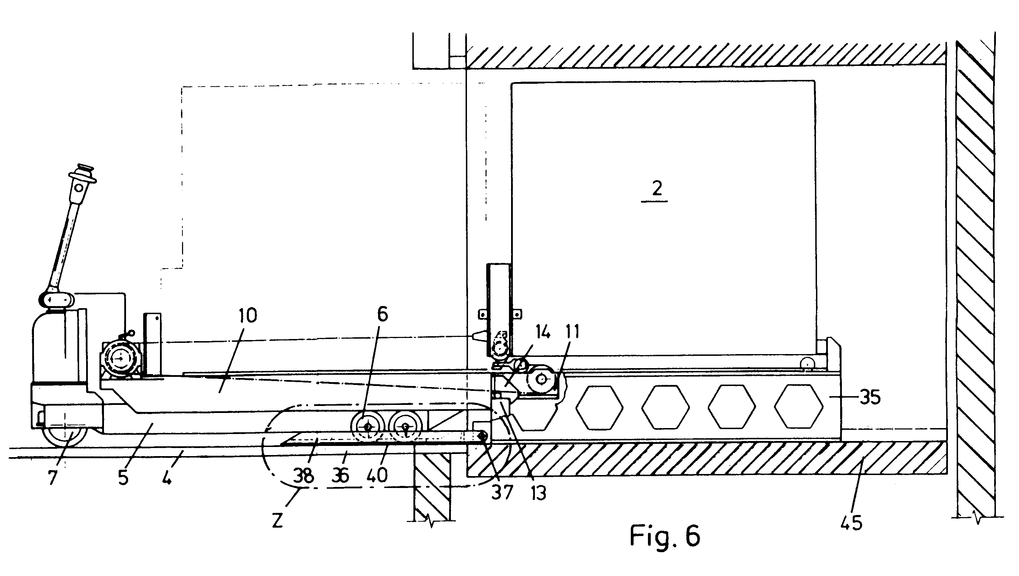

Fig. 6    den Modulwagen in Seitenansicht in Verbindung mit einer Verladeplattform,

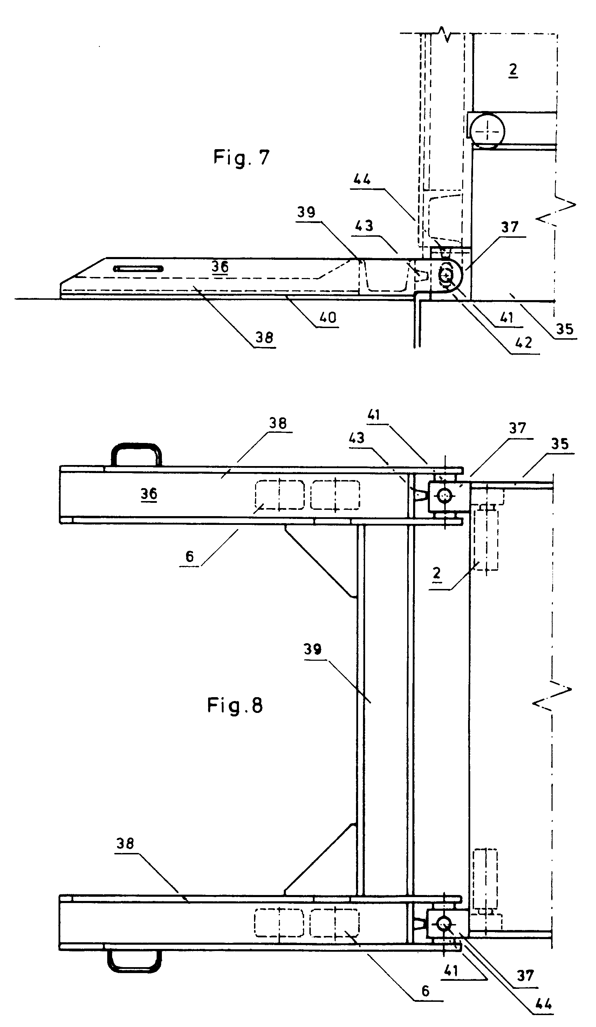

Fig. 7    die Einzelzeit Z nach Fig. 6 und

Fig. 8    die Draufsicht zu Fig. 7.

Von einem Reaktor zur Denitrierung von Rauchgas ist nur ein Teil der Vorderwand 1 dargestellt, die eine oder mehrere Montageöffnungen für das Einsetzen oder Herausholen von Modulen 2 in den oder aus dem Reaktor enthält. Die Module 2 sind in mehreren Reihen neben- und hintereinander in einer oder mehreren Ebenen innerhalb des Reaktors aufgestellt. Jedes Modul 2 besteht aus einem Stahlkäfig, der mit Rollen 3 versehen ist. Die Käfige umschließen keramische Formkörper, die Durchgangskanäle aufweisen und die die Katalysatoren enthalten.

Die Beschickung des Reaktors mit den etwa 2 bis 4 t schweren Modulen 2 erfolgt mit Hilfe des nachfolgend beschriebenen Modulwagens von einer vor dem Reaktorgehäuse angeordneten Bühne 4 aus. Der Modulwagen ist ein Flurfahrzeug, das auf die speziellen Anforderungen für das Be- und Entladen des Reaktors mit den fahrbaren Modulen 2 ausgebildet ist. Der Modulwagen weist einen Stahlrahmen 5 und ein Fahrwerk aus nicht angetriebenen Rädern 6 und einem angetriebenen Rad 7 auf. Als Energiequelle für das Rad 7 und weiterer Aggregate dient eine auf dem Stahlrahmen 5 aufgestellte Batterie 8. Zur Lenkung und Steuerung des Modulwagens wird eine schwenkbare Deichsel 9 verwendet, in deren Kopf Schalter angeordnet sind. Auf dem Stahlrahmen 5 ist eine über einen nicht dargestellten Hydromotor hebbare Plattform 10 angeordnet, die für die Aufnahme eines Moduls 2 bestimmt ist.

An der der Deichsel 9 abgewandten Stirnfläche ist die Plattform 10 mit einer Einrichtung zur Zielfindung versehen. Der dargestellte Modulwagen ist mit einer mechanischen Zentriereinrichtung ausgerüstet, die aus einem nach außen konisch zulaufenden, den Modulwagen überragenden Vorsprung 11 besteht, der an die Stirnfläche der Plattform 10 angeschraubt ist.

Mit dem Vorsprung 11 wirken zwei Zapfen 12 zusammen, die an einem die untere Seite jeder Montageöffnung in der Vorderwand 1 des Reaktors begrenzenden Querträger 13 befestigt sind. Die lichte Weite zwischen den Zapfen 12 entspricht der größten Breite des Vorsprunges 11. Mit dieser Zentriereinrichtung kann eine in Fahrrichtung des Modulwagens liegende Position eines Modules 2 innerhalb des Reaktors angesteuert werden.

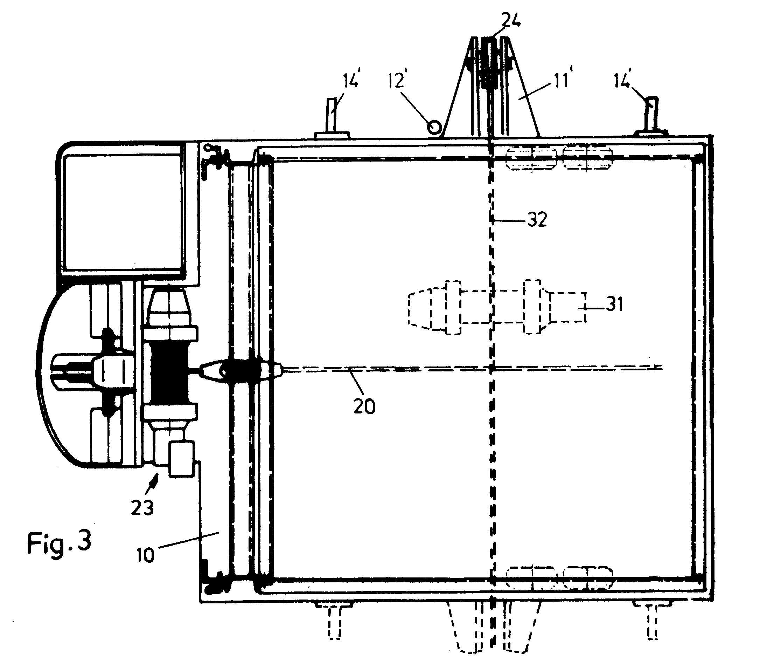

Der Vorsprung 11 ist lösbar mit der Plattform 10 verbunden und kann außer an der Stirnfläche auch an jeder der beiden seitlichen Außenflächen der Plattform 10 angeschraubt sein. (Fig. 3). Bei einer seitlichen Anordnung des Vorsprunges 11' wird eine quer zur Fahrrichtung des Modulwagens liegende Position eines Moduls 2 innerhalb des Reaktors angesteuert. In diesem Fall ist nur ein Zapfen 12' auf einem vor der betreffenden Position angeordneten ortsfesten Träger vorzusehen.

Die beschriebene mechanische Zentriereinrichtung kann auch durch eine berührungsfrei arbeitende Zielfindungseinrichtung ersetzt werden. Dabei ist auf der Plattform 10 des Modulwagens eine Meßeinrichtung bzw. ein Sender und an der Vorderwand des Raktors ein Sensor bzw. ein Empfänger angeordnet.

Zusätzlich zu der Zentrier- oder Zielfindungseinrichtung ist an der betreffenden Außenfläche der Plattform 10 eine Andockvorrichtung angebracht. Diese Andockvorrichtung besteht aus zwei nach unten offenen Klauen 14, 14,' die zu beiden Seiten des Vorsprunges 11 an der Außenfläche der Plattform 10 lösbar befestigt sind. Die Klauen 14, 14' sind geeignet, den die untere Seite der Montageöffnung in der Vorderwand 1 begrenzenden Querträger 13 oder bei seitlicher Anordnung der Andockvorrichtung den entsprechenden ortsfesten, vor der endgültigen Position des Moduls angeordneten Träger, zu übergreifen, wenn die Außenfläche des Modulwagens den Träger berührt.

Mit einem vertikalen Träger 15 der Plattform 10 ist eine Traverse 16 über einrückbare Bolzen 30 lösbar verbunden. Die Traverse 16 ist mit zwei Haken 17 versehen, über die jeweils eine Seilöse 18, 19 eines Seilzuges 20, 21 greift. Die beiden Seilzüge 20, 21 sind zu einer Seiltrommel 22 einer Seilwinde 23 geführt. Auf diese Seiltrommel 22, deren Drehrichtung umkehrbar ist, sind die beiden Seilzüge 20, 21 mit entgegengesetzter Aufwickelrichtung aufgewickelt. Es ist auch möglich, für jeden der beiden Seilzüge 20, 21 eine eigene Seilwinde vorzusehen. Die Seilwinde 23 oder die Seilwinden sind auf der Plattform 10 angeordnet. Einer der Seilzüge 20 ist um eine Seilrolle 24 geschlungen, die in einer mittigen Ausnehmung des Vorsprunges 11 gehalten ist. Es ist auch möglich, nur diesen um die Seilrolle 24 geführten Seilzug 20 vorzusehen.

Zusätzlich zu dem beschriebenen Seilsystem kann ein weiteres Seilsystem vorgesehen werden, das entsprechend Fig. 3 quer zu dem erstgenannten Seilsystem angeordnet ist. Dieses weitere Seilsystem besteht aus einem Seilzug 32 und einer Seilwinde 31, die an der Unterseite der Plattform 10 befestigt ist. Das weitere Seilsystem wird benutzt, wenn der Vorsprung 11' und die Klauen 14' an einer der seitlichen Außenflächen der Plattform 10 angesetzt sind und die Module 2 quer zur Fahrrichtung des Modulwagens eingesetzt werden sollen.

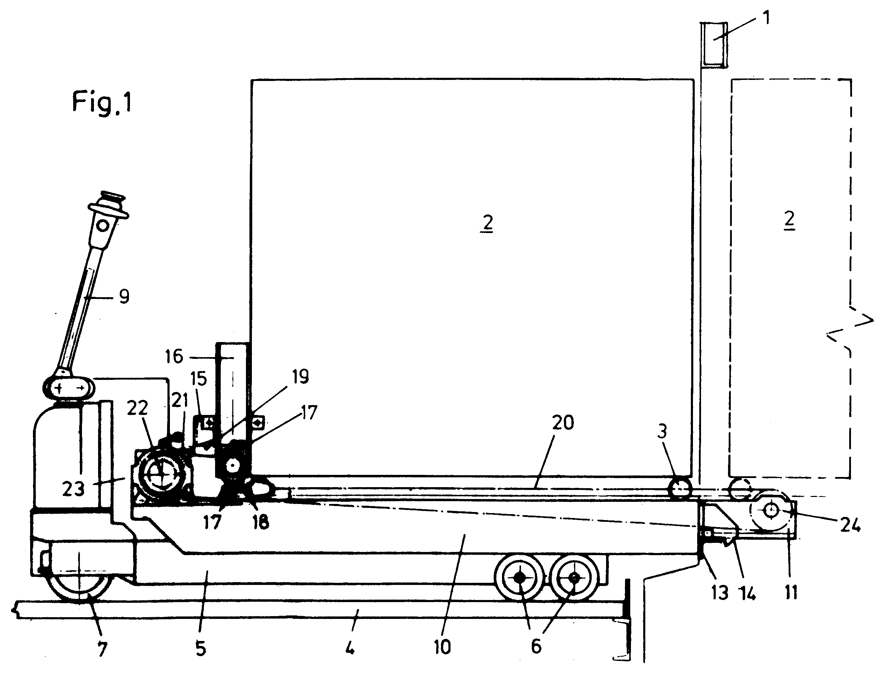

Das Transportieren der Module 2 in den Reaktor geschieht auf folgende Weise: Der Modulwagen übernimmt ein Modul 2 und fährt mit dem Modul 2 vor diejenige Montageöffnung, durch die der Reaktor gerade beladen werden soll. Zur Sicherung des Moduls 2 während des Transportes ist die Traverse 16 mit dem Modul 2 und dem vertikalen Träger 15 der Plattform 10 über die Bolzen 30 verbunden. Bei Verwendung von zwei Seilzügen 20, 21 sind zur weiteren Transportsicherung die Seilösen 18, 19 dieser Seilzüge 20, 21 mit der Traverse 16 verbunden. Für die millimetergenaue Ausrichtung des Modulwagens vor der betreffenden Montageöffnung des Reaktors wird die Zielfindungs- oder Zentriereinrichtung wirksam. Bei der dargestellten mechanischen Zentriereinrichtung wird der Modulwagen von dem Bedienungsmann so der Montageöffnung genähert, daß der Vorsprung 11 zwischen die Zapfen 12 des Querträgers 13 eingreift. Dieses Eingreifen ist für den Bedienungsmann das Zeichen, daß der Modulwagen zur Lastübergabe ausgerichtet ist. Danach wird die Plattform 10 abgesenkt, so daß die Klauen 14 der Andockvorrichtung über den Querträger 13 der Vorderwand 1 greifen. Die Verbindung der Traverse 16 mit dem vertikalen Träger 15 der Plattform 10 wird gelöst und die Seilwinde 23 betätigt. Über den um die Seilrolle 24 geführten Seilzug 20 wird das Modul durch die Montageöffnung in den Reaktor gezogen. Die Gegenkräfte werden bei diesem Vorgang von der Andockvorrichtung aufgenommen. Da die Seilrolle 24 auf dem Vorsprung 11 und außerhalb der Plattform 10 des Modulwagens angeordnet ist, kann das Modul 2 - wie durch den gestrichelten Linienzug in Fig. 1 angedeutet ist - bis in eine Position innerhalb des Reaktors gezogen und damit exakt auf der vorgesehenen Stelle innerhalb des Reaktors positioniert werden.

Ist der Reaktor nur mit einer Montageöffnung versehen, so muß der Modulwagen in den Reaktor hineingefahren werden, um die Module quer in die vorgesehene Position zu schieben. In diesem Fall werden der Vorsprung 11' und die Klauen 14' an diejenige Außenfläche der Plattform 10 geschraubt, über die das Modul 2 mit Hilfe der Seilwinde 31 bewegt wird.

Zum Herausziehen eines Moduls aus dem Reaktor durch die zuvor geöffnete Montageöffnung in der Vorderwand 1 des Reaktors wird bei Verwendung eines einzigen Seilzuges 20 die Traverse 16 um 180 Grad gedreht, so daß die Öffnung des Hakens 17 von der Deichsel 9 wegweist. Die Traverse 16 wird mit dem Modul 2 verbunden, die Seilöse 18 eingehängt, die Seilwinde 23 betätigt und das Modul 2 herausgezogen. Bei Verwendung von zwei Seilzügen 20, 21 wird die Seiltrommel 22 durch eine Umkehrung der Drehrichtung so betätigt, daß der Seilzug 21 belastet wird, während der Seilzug 20 lose mitläuft.

Der Modulwagen kann zur Aufnahme eines Moduls 2 durch ein Hebezeug fremdbeladen werden. In diesem Fall genügt die Anordnung eines einzigen Seilzuges 20. Bei einer Selbstbeladung sind zwei Seilzüge 20, 21 mit einer in der Drehrichtung umkehrbaren Seiltrommel 22 notwendig. Ein so ausgerüsteter Modulwagen kann das Modul 2 von einer Lagerkonstruktion übernehmen oder dort abstellen. Wie der Querträger 13 des Reaktors ist auch die Vorderkante der Lagerkonstruktion mit Zapfen 12 versehen, zwischen die der Vorsprung 11 der Plattform 10 des Modulwagens greift.

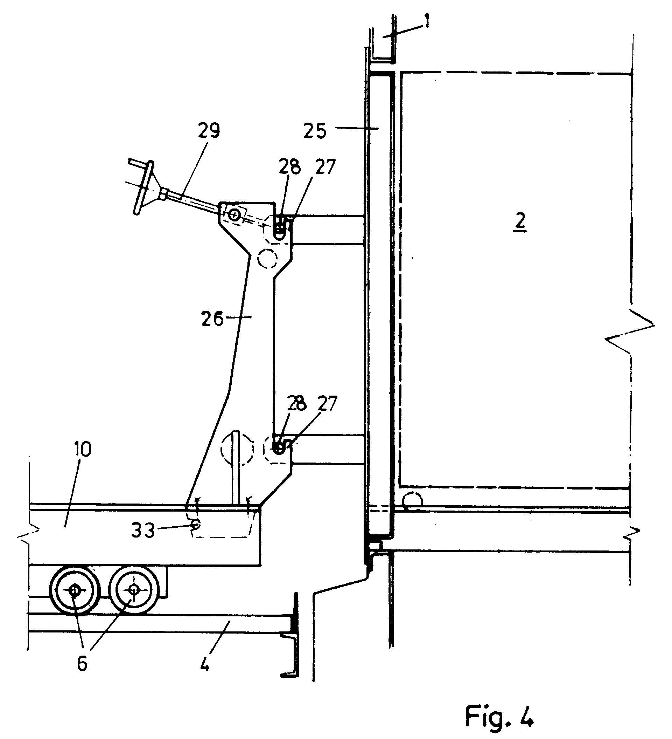

Der beschriebene Modulwagen kann auch zum Verschließen der Montageöffnungen des Reaktors mit einer Verschlußklappe 25 dienen, wenn der Vorsprung 11 von der Plattform 10 abgeschraubt und das in der deutschen Patentanmeldung P 35 46 077.6 beschriebene Gestell 26 auf der Plattform 10 befestigt wird (Fig. 4). Damit der Modulwagen das Gestell 26 ohne fremde Hilfe übernehmen kann, ist das Gestell 26 in oben offenen Trageelementen aufgehängt. Der Hub der Plattform entspricht der Tiefe der Ausnehmung in den Trageelementen. Zur Führung des Gestelles 26 bei der Übernahme durch den Modulwagen dient ein an die Plattform 10 angeschweißter Bolzen 33, über den ein seitlich offener Schlitz in dem Fuß des Gestells 26 greift. Das Gestell 26 ist mit Greiferelementen 27 versehen, die Querstangen 28 an der Verschlußklappe 25 untergreifen. An dem Gestell 26 ist ferner eine mit der Verschlußklappe 25 verbindbare Gewindespindel 29 schwenkbar angeordnet.

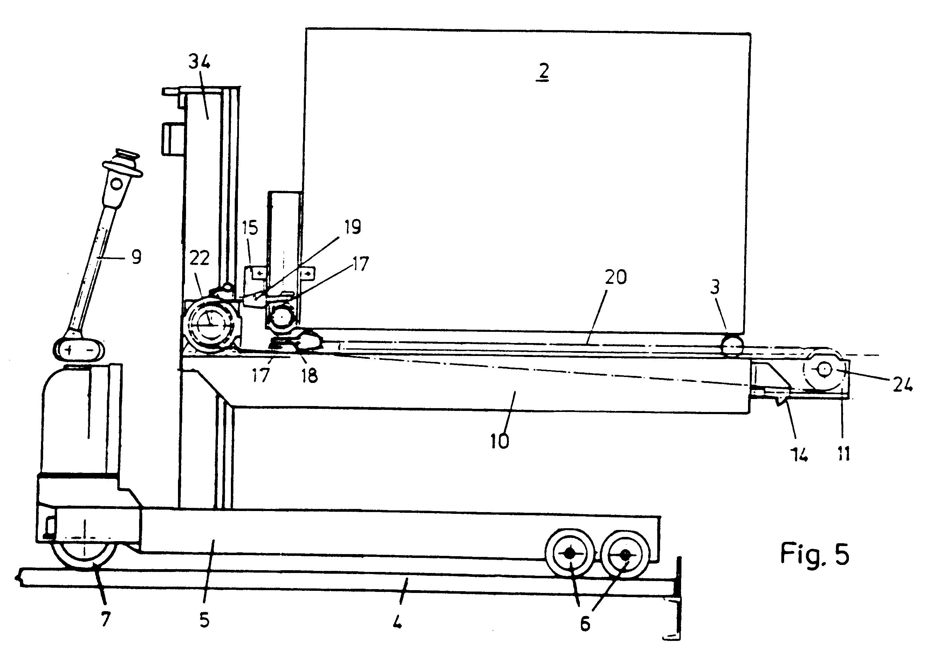

Bei dem in Fig. 1 dargestellten Modulwagen ist die Hubhöhe des Hydromotors nur darauf eingerichtet, um die Plattform 10 des Modulwagens so weit abzusenken, daß die Klauen 14 der Andockvorrichtung über den Querträger 13 greifen können. Um größere Hubhöhen zu überwinden, z. B. um mit dem Modulwagen von einer Bühne 4 aus zwei Reaktorebenen mit Modulen zu beladen, wird die in Fig. 5 dargestellte Hubeinrichtung verwendet. Diese Hubeinrichtung besteht aus einem Mast 34, der an dem Stahlrahmen 5 des Modulwagens befestigt ist. An diesem Mast 34 ist die Plattform 10 geführt. Über einen Kettenantrieb wird die Plattform 10 angehoben und abgesenkt.

Wenn die Module 2 mit Hilfe eines Aufzuges auf die Bühne 4 des Reaktors transportiert werden, kann der Modulwagen jedes Modul 2 von der Aufzugskabine übernehmen. Um die Aufzugskabine bei der Übernahme der Module 2 durch den Modulwagen vor Stößen beim Andocken und vor Bedienungsfehlern zu schützen, ist eine Aufzugssicherungseinrichtung vorgesehen. Diese besteht aus einer Verladebühne 35 und einer Klappe 36, die über ein an der Verladebühne 35 angebrachtes Gelenk 37 verbunden sind. Die Verladebühne 35 liegt lose auf der Kabinenplattform 45 auf und ist mit einem Querträger 13 versehen, über den die Klauen 14 der Andockvorrichtung greifen.

Die Klappe 36 besteht aus zwei parallelen Führungsschienen 38, die durch einen Träger 39 auf einen Abstand gehalten sind, der dem Radabstand des Modulwagens entspricht. Die Führungsschienen 38 weisen ein U-Profil auf, dessen Grundfläche so breit wie oder breiter als die Räder 6 ist. Die Länge der Führungsschienen 38 ist größer als der Abstand der Räder 6 von derjenigen Stirnfläche der Plattform 10, die mit der Andockvorrichtung versehen ist, jedoch kürzer als die Gesamtlänge des Modulwagens. Die Unterseite der Klappe 36 ist mit einer Haftschicht 40 z. B. aus Gummi belegt.

An den Enden der Führungsschienen 38 sind Gelenkbolzen 41 angebracht, die durch Langlöcher 42 des an der Verladebühne 35 befestigten Gelenkes 37 greifen. Jede Führungsschiene 38 ist an der Kopfseite mit einem Bolzen 43 und jedes Gelenk 37 ist mit einer Ausnehmung 44 versehen, deren Innendurchmesser etwas größer ist als der Außendurchmesser des Bolzens 43. Der Bolzen 43 und die Ausnehmung 44 sind so zueinander angeordnet, daß der Bolzen 43 im hochgeklappten Zustand der Klappe 36 in die Ausnehmung 44 greift. Um den Bolzen 43 in die Ausnehmung 44 zu führen, wird zunächst die Klappe 36 so weit angehoben, daß der Gelenkbolzen 41 die obere Begrenzung des Langloches 42 berührt, wonach die Klappe 36 abgesenkt wird. Im hochgeklappten Zustand dient die Klappe 36 gleichzeitig als Sicherung der Module beim Aufzugtransport.

Hat die Kabinenplattform 45 mit der Verladebühne 35 und dem Modul 2 die betreffende Bühne 4 erreicht, so wird die Klappe 36 in die Horizontale aufgeklappt, so daß sie auf der Bühne 4 aufliegt. Die Räder 6 des Modulwagens werden auf die Führungsschienen 38 der Klappe 36 gefahren. Durch das Gewicht des Modulwagens, unterstützt durch die Haftschicht 40 auf der Unterseite der Klappe 36, liegt die Klappe 36 unverschieblich auf der Bühne 4. Bei einer Annäherung des Modulwagens an die Verladebühne 35 kann sich diese nicht mehr innerhalb des Aufzuges verschieben, so daß eine Beschädigung des Aufzuges beim Andockvorgang vermieden wird.

## Patentansprüche

1. Vorrichtung zum Be- und Entladen eines Reaktors zur Denitrierung von Rauchgasen mit fahrbaren Modulen (2), die innerhalb des Reaktors neben- und hintereinander auf vorgegebenen Positionen angeordnet sind, mit Hilfe eines Wagens, der mit einer hebbaren Plattform (10) zur Aufnahme des Moduls (2) und mit einer an das Modul (2) angreifenden Seilwinde (23, 31) versehen ist, dadurch **gekennzeichnet,** daß die Plattform (10) an einer Außenfläche mit einer Einrichtung zur Zielfindung, die mit einer ortsfesten Markierung zusammenwirkt, und mit einer Andockvorrichtung, die einen ortsfesten Träger übergreift, versehen ist und daß die Markierung und der Träger vor der betreffenden Position eines Moduls (2) angeordnet sind.

2. Vorrichtung nach Anspruch 1, dadurch gekennzeichnet, daß die Einrichtung zur Zielfindung aus einem die Außenfläche der Plattform (10) überragenden und an dieser befestigten Vorsprung (11, 11') und aus einem auf dem Träger (13) befestigten Zapfen (12, 12') besteht.

3. Vorrichtung nach Anspruch 2, dadurch gekennzeichnet, daß der Vorsprung (11, 11') konisch ist und zwischen zwei Zapfen (12) greift, deren lichter Abstand der größten Breite des Vorsprunges (11) entspricht.

4. Vorrichtung nach einem der Ansprüche 1 bis 3, dadurch gekennzeichnet, daß die Andockvorrichtung nach unten offenen Klauen (14, 14') besteht.

5. Vorrichtung nach einem der Ansprüche 1 bis 4, dadurch gekennzeichnet, daß der Vorsprung (11, 11') und die Klauen (14, 14') lösbar mit der Plattform (10) verbunden sind.

6. Vorrichtung nach einem der Ansprüche 1 bis 5, dadurch gekennzeichnet, daß der die Plattform (10) überragende Vorsprung (11, 11') mit einer Seilrolle (24) versehen ist.

7. Vorrichtung nach einem der Ansprüche 1 bis 6, dadurch gekennzeichnet, daß eine Traverse (16) mit dem Modul (2) verbindbar ist und daß die Traverse (16) mit einem Haken (17) versehen ist, der in eine Seilöse (18) eines Seilzuges (20) der Seilwinde (23) eingreift.

8. Vorrichtung nach einem der Ansprüche 1 bis 6, dadurch gekennzeichnet, daß eine Traverse (16) mit dem Modul (2) verbindbar ist, daß die Traverse (16) mit zwei Haken (17) versehen ist, in die jeweils eine Seilöse (18, 19) eines Seilzuges (20, 21) eingreift und daß die Seilzüge (20, 21) zu zwei getrennten Seilzügen oder zu einer Seiltrommel (22) einer Seilwinde (23) geführt sind, wobei diese Seiltrommel (22) in der Drehrichtung umkehrbar ist und die Seilzüge (20, 21) in entgegengesetzter Aufwickelrichtung auf die Seiltrommel (22) aufwickelbar sind.

9. Vorrichtung nach einem der Ansprüche 1 bis 8, dadurch gekennzeichnet, daß auf dem Wagen eine Batterie (8) als Energiequelle angeordnet ist.

10. Vorrichtung nach einem der Ansprüche 1 bis 9, dadurch gekennzeichnet, daß auf der hebbaren Plattform (10) ein Gestell (26) zur Handhabung von die Montageöffnungen des Reaktors verschließenden Verschlußklappen (21) aufstellbar ist.

11. Vorrichtung nach einem der Ansprüche 1 bis 10, dadurch gekennzeichnet, daß auf dem Stahlrahmen (5) des Wagens ein Mast (34) angeordnet ist, an dem die Plattform (10) geführt und über einen Kettenzug heb- und senkbar ist.

12. Vorrichtung nach einem der Ansprüche 1 bis 11, dadurch gekennzeichnet, daß der Wagen über die Andockvorrichtung mit einer Verladebühne (35) verbindbar ist, daß mit der Verladebühne (35) über ein Gelenk (37) eine zwei Führungsschienen (38) aufweisende Klappe (36) verbunden ist, daß der Abstand der Führungsschienen (38) voneinander dem Radabstand des Wagens, daß die Länge der Führungsschienen (38) mindestens dem Abstand der Räder (6) von der die Andockvorrichtung aufnehmenden Stirnfläche der Plattform (10) und daß die Breite der Führungsschienen (38) der Breite der Räder (6) entspricht.

13. Vorrichtung nach Anspruch 12, dadurch gekennzeichnet, daß die Unterseite der Klappe (36) mit einer Haftschicht (40) z. B. aus Gummi belegt ist.

14. Vorrichtung nach Anspruch 12 oder 13, dadurch gekennzeichnet, daß das Gelenk (37) ein Langloch (42) aufweist und mit einer Ausnehmung (44) versehen ist und daß auf jeder Führungsschiene (38) eine dem Durchmesser der Ausnehmung (44) entsprechender Bolzen (43) angebracht ist, wobei der Bolzen (43) und die Ausnehmung (44) so zueinander angeordnet sind, daß der Bolzen (43) bei senkrecht stehender Klappe (36) in die Ausnehmung (44) eingreift.

## Claims

1. Device for the loading and unloading of a reactor for the denitration of flue gases, with portable modules (2), which are arranged within the reactor beside and behind one another in predetermined positions with the aid of a car, which is provided with a raisable platform (10) for the reception of the module (2) and with a cable winch (23, 31) engaging at the module (2), characterised thereby that the platform (10) is provided at an outer surface with an equipment for the target location, which cooperates with a stationary marking, and with a docking device which engages a stationary carrier, and that the marking and the carrier are arranged in front of the relevant position of a module (2).

2. Device according to claim 1, characterised thereby that the equipment for the target location consists of a projection (11, 11') projecting from and fastened to the outer surface of the platform (10) and of a pin (12, 12') fastened on the carrier (13).

3. Device according to claim 2, characterised thereby that the projection (11, 11') is conical and engages between two pins (12), the clear spacing of which corresponds to the greatest width of the projection (11).

4. Device according to one of claims 1 to 3, characterised thereby that the docking device consists of downwardly open claws (14, 14').

5. Device according to one of claims 1 to 4, characterised thereby that the projection (11, 11') and the claws (14, 14') are detachably connected with the platform (10).

6. Device according to one of claims 1 to 5, characterised thereby that the projection (11, 11') projecting from the platform (10) is provided with a cable sheave (24).

7. Device according to one of claims 1 to 6, characterised thereby that a crossbeam (16) is connectible with the module (2) and that the crossbeam (16) is provided with hooks (17), which engage in a cable eye (18) of a cable pull (20) of the cable winch (23).

8. Device according to one of claims 1 to 6, characterised thereby that a crossbream (16) is connectible with the module (2), that the crossbeam (16) is provided with two hooks (17) in each of which engages a cable eye (18, 19) of a cable pull (20, 21) and that the cable pulls (20, 21) are guided to two separate cable pulls or to a cable drum (22) of a cable winch (23), wherein this cable drum (22) is reversible in rotational direction and the cable pulls (20, 21) are windable up on the cable drum (22) in opposite winding directions.

9. Device according to one of claims 1 to 8, characterised thereby that a battery (8) is arranged as energy source on the car.

10. Device according to one of claims 1 to 9, characterised thereby that a frame (26) for the manipulation of the closure flaps (21) closing the mounting openings of the reactor is settable on the raisable platform (10).

11. Device according to one of claims 1 to 10, characterised thereby that arranged on the steel frame (5) of the car is a mast (34) at which the platform (10) is guided and is raisable and lowerable by a chain drive.

12. Device according to one of claims 1 to 11, characterised thereby that the car is connectible by way of the docking device with a loading stage (35), that a flap (36) having two guide rails (38) is connected by way of a joint (37) with the loading stage (35), that the spacing of the guide rails (38) from one another corresponds to the wheel spacing of the car, that the length of the guide rails (38) at least corresponds to the spacing of the wheels (6) from the end surface, which receives the docking device, of the platform (10), and that the width of the guide rails (38) corresponds to the width of the wheels (6).

13. Device according to claim 12, characterised thereby that the underside of the flap (36) is coated with an adhesive layer (40), for example of rubber.

14. Device according to claim 12 or 13, characterised thereby that the joint (37) has an elongate hole (42) and is provided with a recess (44) and that mounted on each guide rail 938) is a bolt (43) corresponding to the diameter of the recess (44), wherein the bolt (43) and the recess (44) are so arranged relative to one another that with vertically standing flap (36) the bolt (43) engages in the recess (44).

## Revendications

1. Dispositif de chargement et de déchargement d'un réacteur de dénitruration de gaz de fumée, comportant des modules mobiles (2), disposés à l'intérieur du réacteur, les uns à côté des autres et les uns derrière les autres, en des positions prédéterminées, à l'aide d'un chariot pourvu d'une plateforme montante (10), pour recevoir le module (2) et avec un treuil à câble (23,31) saisissant le module (2), caractérisé en ce que la plateforme (10) est pourvue, sur une surface extérieure, d'un dispositif de recherche de cible, qui coopère avec un marquage localement fixe, et avec un dispositif d'accostage qui entoure un support localement fixe, et en ce que le marquage et le support sont disposés devant la position concernée d'un module (2).

2. Dispositif selon la revendication 1, caractérisé en ce que le dispositif de recherche de cible se compose d'une saillie (11,11'), qui dépasse de la surface extérieure de a plateforme (10) et qui est fixée à celle-ci et d'un tourillon (12,12) fixé au support (13).

3. Dispositif selon la revendication 2, caractérisé en ce que la saillie (11,11') est conique et s'engage entre deux tourillons (12), dont l'espacement libre correspond à la plus grande largeur de la saillie (11).

4. Dispositif selon l'une des revendications 1 à 3, caractérisé en ce que le dispositif d'accostage se compose de griffes ouvertes vers le bas (14,14').

5. Dispositif selon l'une des revendications 1 à 4, caractérisé en ce que la saillie (11,11') et les griffes (14,14') sont reliées de façon démontable à la plateforme (10).

6. Dispositif selon l'une des revendications 1 à 5, caractérisé en ce que la saillie (11,11') qui dépasse la plateforme (10) est pourvue d'un rouleau à câble (24).

7. Dispositif selon l'une des revendications 1 à 6, caractérisé en ce qu'une traverse (16) est susceptible d'être reliée au module (2) et que la traverse (16) est pourvue d'un crochet (17), qui s'engage dans un oeillet de câble (18) d'un brin de câble (20) du treuil à câble (23).

8. Dispositif selon l'une des revendications 1 à 6, caractérisé en ce qu'une traverse (16) est susceptible d'être reliée au module (2), en ce que la traverse (16) est pourvue de deux crochets (17) dans lesquels s'engage chaque fois un oeillet de câble (18,19) d'un brin de câble (20,21), et en ce que les brin de câble (20,21) d'un treuil à câble (23) sont guidés, le sens de rotation de ce tambour à câble (22) étant susceptible d'être inversé et les brins de câble (20,21) étant susceptibles d'être enroulés sur le tambour à câble (22) suivant un sens d'enroulement inversé.

9. Dispositif selon l'une des revendications 1 à 8, caractérisé en ce qu'une batterie (8) servant de source d'énergie est disposée sur le chariot.

10. Dispositif selon l'une des revendications 1 à 9, caractérisé en ce qu'un bâti (26), destiné à la manipulation de capuchons d'obturation (21) obturant les ouvertures de montage du réacteur, est susceptible d'être appliquée sur la plateforme montante (10).

11. Dispositif selon l'une des revendications 1 à 10, caractérisé en ce qu'un mât (34), sur lequel la plateforme est guidée et susceptible d'être levée et descendue par l'intermédiaire d'un brin de chaîne, est disposé sur le cadre en acier (5) du chariot.

12. Dispositif selon l'une des revendications 1 à 11, caractérisé en ce que le chariot est susceptible d'être relié à une plateforme de chargement, par l'intermédiaire du dispositif d'accostage, en ce que l'un volet (36), qui présente deux glissières de guidage (38) est relié à la plateforme de chargement (35), par l'intermédiaire d'une articulation (37), en ce que la distance entre les glissières de guidage (38) correspond à la voie du chariot, en ce que la longueur des glissières de guidage (38) correspond au moins à la distance entre les roues (6) et la face frontale, recevant le dispositif d'accostage, de la plateforme (10) et en ce que la largeur des glissières de guidage (38) correspond à la largeur des roues (6).

13. Dispositif selon la revendication 12, caractérisé en ce que la face inférieure du volet (36) est recouverte d'une couche adhérente (40), par exemple en caoutchouc.

14. Dispositif selon la revendication 12 à 13, caractérisé en ce que l'articulation (37) présente un trou allongé (42) et est pourvue d'un évidement (44) et en ce que, sur chaque glissière de guidage (38), est monté un boulon (43) correspondant au diamètre de l'évidement (44), le boulon (43) et l'évidement (44) étant disposés l'un par rapport à l'autre de façon que le boulon s'engage dans l'évidement (44) lorsque le volet est relevé à la verticale.

Fig.1

EP 0 267 511 B1

Fig.2

Fig.3

EP 0 267 511 B1

Fig. 4

Fig. 5

Fig. 6

Fig. 7

Fig. 8